**Europäisches Patentamt**

**European Patent Office**

**Office européen des brevets**

(19)

(11) Veröffentlichungsnummer : **0 372 169 B1**

(12)

# EUROPÄISCHE PATENTSCHRIFT

(45) Veröffentlichungstag der Patentschrift :
**21.10.92 Patentblatt 92/43**

(51) Int. Cl.$^5$ : **F16F 13/00**

(21) Anmeldenummer : **89115366.0**

(22) Anmeldetag : **19.08.89**

(54) **Hydraulisch dämpfendes Gummilager.**

(30) Priorität : **07.12.88 DE 3841193**

(43) Veröffentlichungstag der Anmeldung :
**13.06.90 Patentblatt 90/24**

(45) Bekanntmachung des Hinweises auf die
Patenterteilung :
**21.10.92 Patentblatt 92/43**

(84) Benannte Vertragsstaaten :
**BE FR GB IT NL SE**

(56) Entgegenhaltungen :
**EP-A- 234 966**
**EP-A- 0 115 417**
**EP-A- 0 224 355**
**EP-A- 0 236 720**
**WO-A-88/08091**

(73) Patentinhaber : **Boge GmbH**
**Bogestrasse 50**
**W-5208 Eitorf/Sieg (DE)**

(72) Erfinder : **Brenner, Heinrich**
**Am Thurmberg 11**
**W-5483 Ahrweiler (DE)**

## Beschreibung

Hydraulisch dämpfendes Gummilager

Die Erfindung bezieht sich auf ein hydraulisch dämpfendes Gummilager, bestehend aus einem Innenrohr, einem dazu mit Abstand angeordneten Außenrohr und dazwischen eingesetzter Gummifeder, in welchem dämpfungsmittelgefüllte, hydraulisch über Drosselkanäle miteinander verbundene Kammern ausgebildet und nach außen abgedichtet sind, wobei die Gummifeder gleichzeitig als Tragfeder und Dichtelement ausgebildet ist, und daß mindestens eine Kammer mit einer Entkopplungsmembran versehen ist, welche die Kammer zur Atmosphäre abtrennt. Ein derartiges Gummilager ist aus der älteren, nachveröffentlichten EP-A 0.335.005 bekannt. Weiterhin ist aus der EP-A-234966 ein Gummilager bekannt, wie es im Oberbegriff von Anspruch 1 angegeben ist.

Es sind bereits hydraulisch dämpfende Gummilager vorgeschlagen (zum Beispiel GB-A 2.192.968, US-A 4.690.389), welche zur wirksamen Entkopplung von hochfrequenten Schwingungen mit kleinen Amplituden in den Kammern je eine durch eine Entkopplungsmembran abgedichtete Ausnehmung aufweisen. Es hat sich jedoch gezeigt, daß bei zunehmender Erwärmung des Lagers die Wirkung der Entkopplung nachläßt bedingt durch die Wärmeausdehnung des Dämpfungsmittels und des Gummis, so daß in den Kammern ein überdruck entsteht. Als folge dieses überdruckes gelangt die Entkopplungsmembran an der starren Außenwand zur Anlage und wird somit unwirksam.

Darüber hinaus sind Zweikammer-Motorlager mit hydraulischer Dämpfung bekannt (z.B. DE-A.32 45 653), bei denen die Kammern über eine Drosselöffnung miteinander verbunden sind und bei denen eine Kammer über eine Rohrleitung mit einer Ausgleichskammer in Wirkverbindung steht. Als Wirkverbindung wird dabei die Anordnung einer oder mehrere Ausgleichskammern unterschiedlicher Größe und Ausbildung sowie unterschiedliche Entfernung verstanden. Es können zum Lager unabhängige Dämpfungswirkungen in unterschiedlichen Frequenzbereichen in der Rohrleitung erzielt werden, so daß das Lager zwei oder mehrere Dämpfungsmaxima -in Abhängigkeit von der Anzahl der Ausgleichskammern- aufweist.

Aufgabe der Erfindung ist es, ein hydraulisch dämpfendes Gummilager so weiterzubilden, daß die Erhaltung einer wirksamen Entkopplung in allen Betriebszuständen, insbesondere bei Erwärmung möglich ist.

Zur Lösung dieser Aufgabe ist vorgesehen, daß mindestens eine der Kammern über eine Verbindungsleitung mit einer Ausgleichskammer verbunden ist, wobei die Verbindungsleitung in ihrer Länge so groß und in ihrem Durchmesser so klein gewählt ist, daß bei Druckstößen in den Kammern keine wesentliche Dämpfung und Flüssigkeitsströmung in der Verbindungsleitung erfolgt, sondern lediglich ein Volumenausgleich bei langsamen Druckänderungen zugelassen wird und daß die Ausgleichskammer durch eine Ausgleichsmembran in eine Dämpfungsmittel aufnehmende Teilkammer und eine durch externen Druck beaufschlagbare Teilkammer oder Ausnehmung unterteilt ist.

Bei dieser Ausbildung ist von Vorteil, daß durch die Verbindungsleitung die Kammern mit der Ausgleichskammer verbunden werden, welche bei einer zunehmenden Erwärmung des Gummilagers das zusätzlich entstandene Volumen drucklos aufnimmt und so die Wirksamkeit der Entkopplung sichert. Bei einer zunehmenden Erwärmung bleibt die Entkopplung des Lagers immer wirksam, da durch die Wärmelischen Kammern der überdruck von der Ausgleichskammer aufgefangen wird und die Entkopplungswände wirksam bleiben und nicht an den starren Außenwänden zur Anlage kommen.

Die Verbindungsleitung ist in ihrer Länge und in ihrem Innendurchmesser so gewählt, daß bei Druckstößen in den Kammern keine wesentliche Dämpfung und Strömung in der Verbindungsleitung entsteht; lediglich der Volumenausgleich kommt in kurzer Zeit zustande.

In weiterer Ausgestaltung der Erfindung ist die Ausgleichskammer im Gummilager integriert

Eine weitere Ausgestaltung der Erfindung sieht vor, daß die Ausgleichskammer als separates Bauteil ausgebildet ist.

In weiterer wesentlicher Ausgestaltung der Erfindung ist vorgesehen, daß die Ausgleichsmembran mit überdruck, Unterdruck oder Atmosphärendruck beaufschlagt wird.

Bei einer derartigen Vorrichtung läßt sich durch eine entsprechende Druckbeaufschlagung der Ausgleichsmembran eine Steuerung und Beeinflussung der Entkopplung erreichen, wenn die der Hydraulikflüssigkeit gegenüberliegende Ausgleichsmembran wahlweise durch die Außenluft (Atmosphäre) oder mit überdruck oder mit Unterdruck beaufschlagt wird. Wird die Ausgleichsmembran beispielsweise mit Unterdruck beaufschlagt, so wird eine kleine Teilmenge der Dämpfungsflüssigkeit aus den hydraulischen Kammern abgesaugt, es entsteht ein geringer Unterdruck und die Entkopplungsmembrane der Kammern erhalten einen größeren Abstand zum starren Außenrohr. Dadurch wird die Dämpfung verringert und die Entkopplungswirksamkeit vergrößert. Hierdurch kann beispielsweise bei Anwendung des Gummilagers in einem Fahrzeugmotor z.B. der Motor beim Anlassen frei schwingen, ohne große Kräfte auf die Karosserie zu übertragen.

Wird die Ausgleichsmembran mit einem überdruck beaufschlagt, wird auch die Dämpfungsflüssigkeit in den hydraulischen Kammern vorgespannt, und der Abstand der Entkopplungsmembrane zu dem Außenrohr verringert. Die Dämpfung wird erhöht bei gleichzeitiger Verringerung der Entkopplung. Das kann z.B. von Vorteil sein bei extrem schlechten Fahrbahnen, bei denen der Motor eines Fahrzeuges in seiner Schwingbeweglichkeit eingeschränkt werden soll.

Eine weitere wesentliche Ausführungsform sieht vor, daß die Teilkammer gegenüber der Atmosphäre offen ist.

Bevorzugte Ausführungsbeispiele sind in den Zeichnungen schematisch dargestellt.

Es zeigt:

Figur 1 ein hydraulisch dämpfendes Gummilager mit einer integrierten Ausgleichskammer im Schnitt

Figur 2 ein hydraulisch dämpfendes Gummilager mit einer separat angeordneten Ausgleichskammer im Schnitt

Figur 3 eine Ausgleichskammer mit einem Anschluß zur Steuerung als Einzelheit im Schnitt.

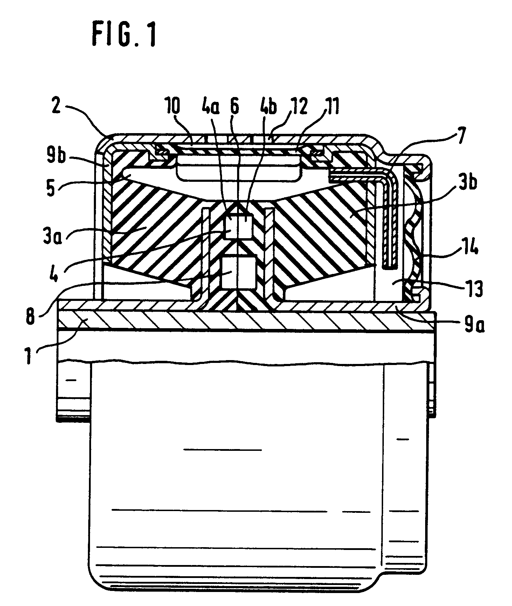

Das in figur 1 dargestellte hydraulisch dämpfende Gummilager besteht aus einem Innenrohr 1, einem konzentrisch oder exzentrisch dazu im Abstand angeordneten Außenrohr 2 und dazwischen eingesetzter Gummifeder 3, in welchem mit einem Dämpfungsmittel gefüllte, hydraulisch über einen Drosselkanal 4 miteinander verbundene Kammern 5 in form von Hohlräumren des Gummiteiles 3 ausgebildet sind.

Die Gummifeder 3 ist aus zwei gleichen Schubelementen 3a und 3b zusammengesetzt, wobei zur einwandfreien Montage die Armierungsteile 9a und 9b herangezogen werden.

Die beiden Schubelemente 3a und 3b besitzen in den einander zugewandten Flächen 6 jeweils Ausnehmungen 4a und 4b, die nach dem Zusammenbau den Drosselkanal 4 bzw. den als Bypass geschalteten Kanal 8 bilden.

Von der Kammer 5 ausgehend ist eine Verbindungsleitung 7 vorgesehen, die in eine Ausgleichskammer 13 verläuft und die gegenüber der Atmosphäre durch eine Ausgleichsmembran 14 abgedichtet ist. Die Ausgleichskammer 13 zusammen mit ihrer Ausgleichsmembran 14 gewährleistet, daß bei Erwärmung des Gummis und der Dämpfungsflüssigkeit in den Kammern 5 das zusätzlich entstandene Volumen drucklos in die Ausgleichskammer 13 fließen kann. Der Innendurchmesser der Verbindungsleitung 7 ist dabei so klein gewählt, daß bei Druckstößen in der Kammer 5 keine wesentliche Dämpfung und Flüssigkeitsströmung in der Verbindungsleitung 7 entsteht.

Die Kammern 5 sind zusätzlich mit Ausnehmungen 10 versehen, welche über je eine Entkopplungsmembran 11 und Entlüftungsbohrungen 12 der Entkopplung dienen. Bei der Entkopplung wird im Betrieb erreicht, daß hochfrequente Schwingungen die Entkopplungsmembran 11 auslenken, ohne daß eine Dämpfung durch den Drosselkanal 4 erfolgt. Eine derartige Entkopplung ist lediglich dann gewährleistet, wenn auch bei Erwärmung der Dämpfungsflüssigkeit und des Gummis die Entkopplungsmembran 11 nicht am Außenrohr 2 zur Anlage kommt, so daß für diesen Fall die Ausgleichskammer 13 wirksam werden soll.

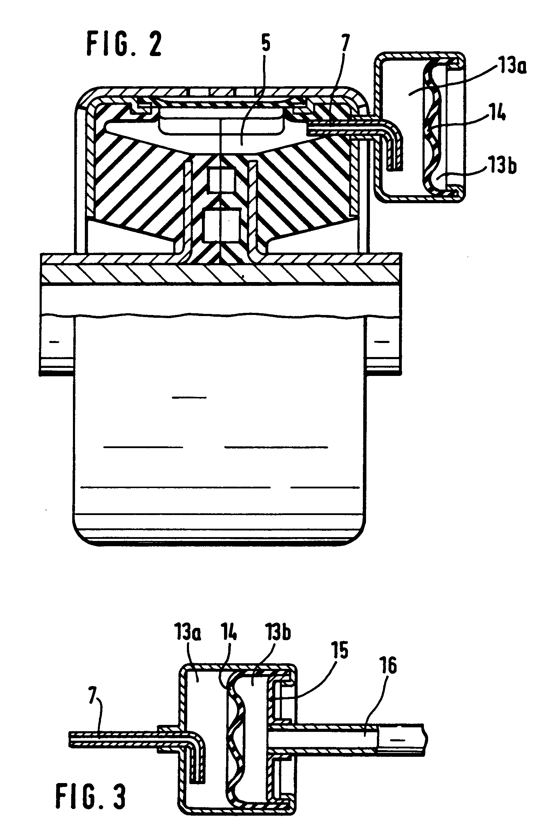

In der Figur 2 ist ein Gummilager, im Prinzip wie in Figur 1 bereits gezeigt, dargestellt mit dem Unterschied, daß die Ausgleichskammer 13 als separates Bauteil ausgeführt ist. Die Kammer 5 wird dabei wiederum durch die Verbindungsleitung 7 mit der Teilkammer 13a der Ausgleichskammer 13 verbunden. Die Ausgleichsmembran 14 trennt die Teilkammer 13a gegenüber der Teilkammer 13b flüssigkeitsdicht ab. Die Ausgleichskammer 13 ist in diesem Falle so ausgebildet, daß die Atmosphäre durch das einseitig offene Ende der Ausgleichskammer 13 direkt auf die Ausgleichsmembran 14 wirken kann.

In der Figur 3 ist die Ausgleichskammer 13 in der Weise weitergebildet, daß die Teilkammer 13b zur Atmosphäre hin durch einen einen Anschluß 16 aufweisenden Deckel 15 verschlossen ist. Über den Anschluß 16 läßt sich die Ausgleichsmembran 14 mit Überdruck, Unterdruck oder wiederum mit Atmosphäre beaufschlagen. Bei einer derartigen Ausbildung sind die Dämpfung und/oder die Entkopplung des Gummilagers entsprechend steuerbar.

**Patentansprüche**

1. Hydraulisch dämpfendes Gummilager, bestehend aus einem Innenrohr (1), einem dazu mit Abstand angeordneten Außenrohr (2) und dazwischen eingesetzter Gummifeder (3), in welchem dämpfungsmittelgefüllte, hydraulisch über Drosselkanäle (9) miteinander verbundene Kammern (5) ausgebildet und nach außen abgedichtet sind, wobei die Gummifeder (3) gleichzeitig als Tragfeder und Dichtelement ausgebildet ist, dadurch gekennzeichnet daß mindestens eine Kammer (5) mit einer Entkopplungsmembran (11) versehen ist, welche die Kammer (5) zur Atmosphäre abtrennt, daß

mindestens eine der Kammern (5) über eine Verbindungsleitung (7) mit einer Ausgleichskammer (13) verbunden ist, wobei die Verbindungsleitung (7) in ihrer Länge so groß und in ihrem Durchmesser so klein gewählt ist, daß bei Druckstößen in den Kammern (5) keine wesentliche Dämpfung und Flüssigkeitsströmung in der Verbindungsleitung (7) erfolgt, sondern lediglich ein Volumenausgleich bei langsamen Druckänderungen zugelassen wird und daß die Ausgleichskammer (13) durch eine Ausgleichsmembran (14) in eine Dämpfungsmittel aufnehmende Teilkammer (13a) und eine durch externen Druck beaufschlagbare Teilkammer oder Ausnehmung (13b) unterteilt ist.

2. Gummilager nach Anspruch 1,
dadurch gekennzeichnet,
daß die Ausgleichskammer (13) im Gummilager integriert ist.

3. Gummilager nach Anspruch 1,
dadurch gekennzeichnet,
daß die Ausgleichskammer (13) als separates Bauteil ausgebildet ist.

4. Gummilager nach Anspruch 1,
dadurch gekennzeichnet,
daß die Ausgleichsmembran (14) mit überdruck, Unterdruck oder Atmosphärendruck beaufschlagt wird.

5. Gummilager nach Anspruch 1,
dadurch gekennzeichnet,
daß die Teilkammer (13b) gegenüber der Atmosphäre offen ist.

## Claims

1. Hydraulically damped rubber mounting comprising an inner tube 1, an outer tube (2) arranged spaced from it and a rubber spring (3) inserted between them, in which are formed , and sealed from outside, chambers (5) filled with damping medium and hydraulically connected together through restricted passages (4) the rubber spring being formed simultaneously as a load-carrying spring and a sealing element, characterised in that at least one chamber (5) is provided with a de-coupling diaphragm (11) which separates the chamber (5) from atmosphere, that at least one of the chambers (5) is connected through a connecting pipe (7) to a compensating chamber (13), the connecting pipe (7) being selected with regard to its length being so large and its diameter so small that in the event of shocks in pressure in the chambers (5) no significant damping and flow of fluid in the connecting pipe (7) takes place, but simply a compensation in volume is permitted on slow pressure changes and that the compensating chamber (13) is divided by a compensating diaphragm (14) into a part-chamber (13a) receiving damping medium and a part-chamber or recess (13b) exposed to external pressure.

2. Rubber mounting according to claim 1,
characterised in that.
the compensating chamber (13) is integrated into the rubber mounting.

3. Rubber mounting according to claim 1,
characterised in that,
the compensating chamber (13) is formed as a separate unit (4).

4. Rubber mounting according to claim 1,
characterised in that,
the compensating diaphragm (14) is exposed to positive pressure, negative pressure or atmospheric pressure.

5. Rubber mounting according to claim 1,
characterised in that,
the part-chamber (13b) is open to atmosphere.

## Revendications

1. Support caoutchouté à amortissment hydraulique, comprenant un tube intérieur (1), un tube extérieur (2) placé à distance de lui et un ressort en caoutchouc (3) inséré entre eux et dans lequel sont formées des chambres (5) remplies d'un fluide d'amortissement, reliées hydrauliquement entre elles à travers des canaux d'étranglement (4) et étanchées vers l'extérieur, le ressort en caoutchouc (3) étant réalisé à la fois comme ressort porteur et comme élément d'étanchéité, caractérisé en ce qu'au moins une chambre (5) est pourvue d'une membrane de découplage (11) qui isole la chambre (5) vis-à-vis de l'atmosphère, qu'au moins l'une des chambres (5) est reliée par une conduite de liaison (7) à une chambre de compensation (13), conduite de liaison dont la longueur est choisie si grande et dont le diamètre est choisi si petit que lorsqu'il se produit des chocs de pression dans les chambres (5), il ne s'effectue pas d'amortissement et d'écoulement de liquide notables dans cette conduite (7), mais que celle-ci autorise seulement une compensation de volume sous de lents changements de pression, et que la chambre de compensation (13) est divisée par une membrane de compensation (14) en une chambre partielle (13a) recevant du fluide d'amortissement et une chambre partielle ou un évidement (13b) auquel peut être appliquée une pression externe.

2. Support caoutchouté selon la revendication 1, caractérisé en ce que la chambre de compensation (13) est intégrée dans le support caoutchouté.

3. Support caoutchouté selon la revendication 1, caractérisé en ce que la chambre de compensation (13) est réalisée comme un organe séparé.

4. Support caoutchouté selon la revendication 1, caractérisé en ce qu'une surpression ou la pression atmosphérique est appliquée à la membrane de compensation (14).

5. Support caoutchouté selon la revendication 1, caractérisé en ce que la chambre partielle ou l'évidement (13b) est ouvert par rapport à l'atmosphère.

# FIG.1

FIG. 2

FIG. 3